# EUROPÄISCHE PATENTSCHRIFT

(11) **EP 2 301 864 B1**
(45) Veröffentlichungstag und Bekanntmachung des Hinweises auf die Patenterteilung: **14.01.2015**
(21) Anmeldenummer: 10009896.1
(22) Anmeldetag: 20.09.2010
(51) Int. Cl.: B65G 1/137

(54) **Verfahren zum Betrieb einer Kommissioniervorrichtung und Kommissioniervorrichtung**
Method for operating a device for order picking and device for order picking
Procédé destiné au fonctionnement d'un dispositif de commissionnement et dispositif de commissionnement

(30) Priorität: 24.09.2009 DE 102009042472
(43) Veröffentlichungstag der Anmeldung: 30.03.2011
(73) Patentinhaber: KHT Kommissionier- und Handhabungstechnik GmbH, 45881 Gelsenkirchen (DE)
(72) Erfinder:
(74) Vertreter: von Renesse, Dorothea

(56) Entgegenhaltungen:
- DE-C2- 19 509 951
- US-A1- 2004 260 423

## Beschreibung

Die Erfindung betrifft ein Verfahren zum Betrieb einer Kommissioniervorrichtung, d.h. einer Vorrichtung zum Ein- und Auslagern von Artikeln, insbesondere von Arzneimittelpackungen. Weiterhin betrifft die Erfindung eine entsprechende Kommissioniervorrichtung.

Eine Kommissioniervorrichtung ist beispielsweise in der DE 195 09 951 C2 offenbart. Diese Vorrichtung, die insbesondere zur automatischen unsortierten Lagerung von kleinteiligen, quaderförmigen Packungen, wie z.B. Arzneimittelpackungen vorgesehen ist, weist eine Übergabevorrichtung in Form eines Endlos-Förderers auf, der sich innerhalb eines Regals zwischen zwei Regalböden erstreckt und die einzulagernden Artikel von einer Aufgabestation bis in den Arbeitsbereich eines Regalbediengeräts führt. Der Endlos-Förderer, der insbesondere als Förderband ausgebildet sein kann, führt dabei von der Schmalseite der Regalanlage, an der eine Aufgabestation für die Packungen angeordnet ist, in den mit zahlreichen übereinander angeordneten Regalböden versehenen Regalbereich hinein. Die neu einzulagernden Gegenstände werden vor der Aufnahme durch das Regalbediengerät mittels eines Barcode-Scanners identifiziert und hinsichtlich ihrer Abmessungen vermessen, so dass ein geeigneter Lagerplatz von einer Rechnersteuerung der Lagervorrichtung gefunden werden kann.

Sowohl die Identifizierung als auch die Vermessung der Gegenstände kann in an sich bekannter Weise vollständig maschinell ausgeführt werden. Zur Verminderung des Anlagenaufwandes ist es jedoch vielfach üblich, die Identifizierung im Rahmen eines Handhabungsvorgangs von einer Bedienperson vornehmen zu lassen, die den Barcode des Gegenstands an einem entsprechenden Lesegerät vorbeiführt und dann den Gegenstand auf den Endlos-Förderer auflegt. Nach Beendigung des Auflegens neu einzulagernder Gegenstände oder nach Erreichen einer vollständigen Belegung des Endlos-Förderers, auf dem die Gegenstände einzeln nebeneinander im Abstand aufgelegt sind, werden die Gegenstände nacheinander durch das Regalbediengerät aufgenommen und auf einen freien Lagerplatz eines der Regalböden eingelagert. Die Positionen, an denen die einzelnen Gegenstände auf dem Endlos-Förderer liegen, werden in der Rechnersteuerung für den gezielten Zugriff des Regalbediengeräts gespeichert.

Die Regalböden bei der Vorrichtung der DE 195 09 951 C2 sind über die gesamte Länge des Regals durchgehend ausgebildet und dienen der unsortierten Lagerung der darauf liegenden Stückgüter; das heißt, die Stückgüter, deren Verpackungen unterschiedliche Größen aufweisen können, werden unsortiert in den Regalen nebeneinander, hintereinander und zum Teil auch übereinander abgelegt. Wird eines der Stückgüter im Folgenden wieder ausgelagert, entsteht ein freier Lagerplatz, dessen Größe in der Rechnersteuerung der Lagervorrichtung gespeichert ist. Hierdurch kann dieser Lagerplatz wiederum mit einem neu einzulagernden Stückgut belegt werden, das genauso groß oder kleiner als das zuvor auf dem entsprechenden Lagerplatz gelagerte Stückgut ist.

Es existieren weiterhin Vorrichtungen zur automatisierten Ein- und Auslagerung von Gütern, bei denen die Stückgüter sortiert in Kanäle unterteilten Regalböden gelagert sind. Eine solche Lagerung bietet sich insbesondere für Stückgüter an, die in größerer Stückzahl vorhanden sind und insbesondere auch gleichzeitig in größerer Stückzahl angefordert werden. Bei entsprechendem Bedarf können gleichzeitig mehrere identische Stückgüter ausgelagert werden. Dies erfolgt in der Regel mittels einer in die Kanäle integrierten Auswurfvorrichtung, die die benötigte Anzahl an Stückgütern aus dem jeweiligen Kanal abgibt, so dass diese auf eine darunter angeordnete Transportvorrichtung, beispielsweise ein Transportband fallen, womit diese zu einer Ausgabestelle transportiert werden. Durch den freien Fall aus gegebenenfalls großer Höhe können die Stückgüter jedoch beschädigt oder zerstört werden. Aus diesem Grund ist es auch bekannt, die Transportvorrichtung vertikal verfahrbar auszubilden, damit diese stets in einer unkritischen Fallhöhe unterhalb des gerade zu leerenden Kanals positioniert ist. Eine solche Vorrichtung ist beispielsweise aus der DE 196 35 396 C2 bekannt.

Eine sortierte Lagerung und die gleichzeitige Betätigung mehrerer Kanäle ermöglicht das gleichzeitige Auslagern mehrerer Stückgüter in einem Auslagerungsvorgang des Automaten. Im Gegensatz dazu wäre bei der Vorrichtung der DE 195 09 951 C2 aufgrund der unsortierten Lagerung der Stückgüter und der spezifischen Ausbildung des Regalbediengeräts, das lediglich das Greifen eines einzigen Stückguts (bzw. mehrerer geometrisch zueinander passender und entsprechend hintereinander liegender Stückgüter) erlaubt, eine der Anzahl der angeforderten Stückgüter entsprechende Anzahl an Auslagerungsvorgängen erforderlich.

Es gibt weiterhin Lager, in denen beide Arten der Lagerung der Stückgüter zum Einsatz kommen. Insbesondere in Apothekenlagern wird ein Teil der Waren, der in relativ großer Stückzahl vorhanden ist (der in absoluten Stückzahlen jedoch häufig den geringere Anteil ausmacht) und auf den häufig zugegriffen wird, in die in Kanäle unterteilten Regalböden gelagert, während der übrige Teil der Stückgüter, der lediglich in geringen Einzelmengen vorrätig gehalten wird, unsortiert auf durchgehenden Regalböden abgelegt wird.

In Versandzentren, wie beispielsweise auch solchen einer Internet-Apotheke, kommt regelmäßig eine sortenreine Vorratslagerung zum Einsatz. Dies liegt zum einen an den regelmäßig großzügigen Platzverhältnissen der häufig in Industriegebieten angesiedelten Lager und zum anderen an dem hohen Durchsatz der Artikel, wodurch regelmäßig eine paletten- oder kistenweise Anlieferung eines Artikels durch den Großhändler oder den Hersteller erfolgt.

Sofern in solchen Versandzentren Kleinaufträge (d.h. Kundenaufträge) zusammengestellt und versendet werden, so wird der damit verbundene Kommissionierauftrag (d.h. eine auftragsbezogene Entnahme von Stückgütern aus einem Lager mit regelmäßig sortenreinen Vorräten) derzeit folgendermaßen gelöst: ein Handhabungsgerät oder auch eine Person nimmt von einer Lagerstellen, an der sich die benötigten Artikel befinden, die gewünschte Stückzahl dieses Artikels und führt diese mit den anderen Artikeln des Auftrags zusammen. Dieses Zusammenführen kann auch mehrstufig erfolgen, so dass zusammengeführte Teilaufträge zu anderen Lagern transportiert werden, um dort komplettiert zu werden.

Damit dies möglichst effektiv erfolgen kann, muss neu angelieferte Ware zunächst bereitgestellt, d.h. so sortiert werden, dass darauf wieder gezielt zugegriffen werden kann. Artikel, die z.B. in Paletten oder Kisten angeliefert werden, werden dabei häufig sortenrein abgestellt. Artikel, die in kleinen Stückzahlen angeliefert werden, können auch "unsortiert" in Regalen untergebracht werden, wobei die Position der jeweiligen Artikel in einer Steuerung eines Handhabungsgeräts gespeichert ist. Ein Zusammenstellung der einzelnen Aufträge aus den Großhandelslieferung, die als "gemischte" Ware geliefert wird, wäre mit einem unverhältnismäßiger Suchaufwand verbunden.

Bei einer automatischen Kommissionierung, d.h. einem Einlagern mit einer Kommissioniervorrichtung, wie sie aus dem Stand der Technik bekannt ist, wird die Ware demnach sortenrein oder "unsortiert", d.h. an beliebiger in der Steuerung gespeicherter Stelle eingelagert, um dann die für die einzelnen Aufträge benötigten Artikel später wieder durch das Handhabungsgerät zusammenstellen zu lassen. Dabei kann das Gerät die einzelnen Artikel Stück für Stück abgeben, einen kompletten (Teil-)Auftrag erst sammeln und dann abgeben oder auch mehrere Aufträge bei einer Fahrt sammeln und dann abgeben.

Beim Internetversand insbesondere von Arzneimitteln ist es häufig üblich, die vom Endkunden bestellte Ware nach Eingang der Bestellung zunächst beim Großhändler zu bestellen und so eine ausufernde Vorratshaltung zu vermeiden. Der Großhändler liefert die Ware dann regelmäßig weder nach Endkunden noch nach Warenart sortiert, sondern alle Teile einer Bestellung (also mehrere Kunden(teil)aufträge gemischt).

Eine direkte Kommissionierung, d.h. Zusammenstellung eines Auftrags aus einer Großhändlerlieferung ist mit einem erheblichen Arbeitsaufwand verbunden, denn die Ware wird entweder von der Kommissioniervorrichtung einlagert, wobei diese die Position der einzelnen Artikel in dem Lager speichert und so eine definierte Ordnung schafft, so dass bei dem dann folgenden Zusammenstellen eines Auftrags die entsprechenden Artikel gezielt ausgelagert werden können, oder die Artikel werden in sortenreinen und möglichst nach Kriterien, wie z.B. Alphabet oder Nummernkreise, organisierten Lagerorten abgelegt.

Eine direkte Kommissionierung, indem die "wahllos" angelieferte Ware direkt in Ausgabestellen ausgeschleust wird, die jeweils einem (Klein-)Auftrag zugeordnet sind, ist insbesondere in einem Versandzentrum einer Internetapotheke mit einem erheblichen Aufwand verbunden, da bei diesen Versandaufträgen regelmäßig nur wenige Artikel zu einem Auftrag zusammengefasst werden müssen (gemittelt regelmäßig nur 1,6 bis 3 Artikel pro Auftrag). Somit müssen entweder eine Vielzahl von Ausgabestellen installiert werden oder eine mehrstufige Kommissionierung erfolgen, bei der zunächst Ausschleusstationen einer Gruppe von Aufträgen zugeordnet werden und in weiteren Sortiervorgängen die Artikel der jeweiligen Auftragsgruppe den einzelnen Aufträgen zugeordnet werden. So können beispielsweise 3600 Aufträge in 60 Ausgabestellen zu jeweils 60 kombinierten Aufträgen zusammengefasst werden; in sich daran anschließenden 60 weiteren Sortiervorgängen werden die 60 Aufträge dann auf die einzelnen Aufträge verteilt. Dabei muss die Ware jedes Mal einzeln identifiziert werden, damit eine Zuordnung zu den einzelnen Aufträgen möglich ist.

Hinzu kommt, dass regelmäßig die von einem Großhändler oder einem Hersteller gelieferte Ware nicht vollständig für bereits eingegangene Aufträge vorgesehen ist, sondern sich darunter auch Artikel befinden, die eine Nachbestellung für Lagervorräte ist. Diese Artikel müssen wieder in das Lager eingelagert werden.

US 2004/260423 A1 offenbart ein Verfahren und eine Vorrichtung nach dem Oberbegriff des Anspruchs 1 bzw. 3.

Ausgehend von diesem Stand der Technik lag der Erfindung die Aufgabe zugrunde, ein verbessertes Verfahren zum Betrieb einer Kommissioniervorrichtung anzugeben; insbesondere sollte die Durchlaufzeit für die Bereitstellung eines Auftrags aus verschiedenen in einem Lager gelagerten oder erst anzuliefernden Artikel verringert werden.

Diese Aufgabe wird durch den Gegenstand des unabhängigen Patentanspruchs 1 gelöst. Eine entsprechende Kommissioniervorrichtung ist Gegenstand des unabhängigen Patentanspruchs 3. Vorteilhafte Ausführungsformen des erfindungsgemäßen Verfahrens bzw. der erfindungsgemäßen Kommissioniervorrichtung sind Gegenstand der abhängigen Patentansprüche und ergeben sich aus der nachfolgenden Beschreibung der Erfindung.

Unter einem "direkten" Transport zu dem Auslagerplatz wird erfindungsgemäß verstanden, dass der oder die entsprechenden Artikel nicht zunächst an einem Vorratslagerplatz zwischengelagert werden. Dies schließt jedoch nicht aus, dass ein kurzes Zwischenlagern auf einem anderen Platz und aus einem Grund, der nicht der Vorratsbildung dient, erfolgen kann.

Durch das erfindungsgemäße Verfahren bzw. die erfindungsgemäße Kommissioniervorrichtung wird direkt bei der Anlieferung von Ware und der darauf folgenden Identifizierung der Artikel durch die Eingangserfassungseinheit geprüft, ob hierfür bereits ein Kundenauftrag vorliegt. Sofern dies der Fall sein sollte, werden diese Artikel direkt mittels des Handhabungsgeräts zu dem Auslagerungsplatz transportiert. Handelt es sich dagegen um Artikel, die der Vorratsbildung dienen, können diese vom Handhabungsgerät an Vorratslagerplätzen abgelegt werden und der Aufenthalt dort in der Steuerung gespeichert werden. Dabei können den Artikeln auch bestimmte Attribute zugeteilt werden, wie z.B. Verfallsdatum, Einlagerdatum, Gewicht, Abmaße, "Kühl-zu-lagernder"-Artikel, etc. Diese Attribute können auch die Auswahl des jeweiligen Vorratslagerplatzes beeinflussen.

Durch das erfindungsgemäße Verfahren kann der von der Kommissioniervorrichtung gemäß dem Stand der Technik bekannte Aufwand, der mit dem zweistufigen Handhaben bestellter und angelieferter Artikel verbunden ist, nämlich das Identifizieren und Sortieren in den Vorratslagerplätzen und das erst dadurch ermöglichte gezielte Auslagern und Zusammenstellen zu einem Auftrag verringert werden.

Bei der vorliegenden Erfindung ist vorgesehen, dass eine Mehrzahl von auszulagernden Artikeln mittels der Eingabeeinheit zu einem Auftrag zusammengefasst werden, wobei die Artikel des Auftrags vor der Auslagerung an dem Auslagerplatz gesammelt werden.

Solche Aufträge können sich nicht nur aus bereits eingegangenen (Kunden-)Aufträgen ergeben, sondern hierbei kann es sich auch um beispielsweise erwartete Aufträge handeln. Beispielsweise kann bei einer Kommissionierung von Medikamentenpackungen in Apotheken vorgesehen sein, Aufträge mit einer Kombination unterschiedlicher Medikamentenpackungen, die regelmäßig von Kunden aufgrund einer entsprechenden Verschreibung durch einen Arzt bestellt werden, (kurz) vor einer erwarteten neuen Bestellung auf erfindungsgemäße Art gesammelt werden.

Weiterhin bevorzugt kann vorgesehen sein, dass diejenigen Artikel eines Auftrags, die zum Zeitpunkt der Eingabe des Auftrags bereits in den Vorratslagerplätzen vorhanden sind, aus den Vorratslagerplätzen ausgelagert und zu dem Auslagerplatz transportiert werden. Dadurch können Aufträge, für deren Komplettierung noch Artikel geliefert werden müssen, bereits vorbereitet werden, so dass nach der Lieferung der fehlenden Artikel der Auftrag möglichst umgehend fertig gestellt und ausgeliefert werden kann. Dies kann auch dann vorgesehen sein, wenn (ein Teil der) Artikel, die vorrätig sind, auch in derselben Lieferung, in der auch die fehlenden Artikel erwartet werden, enthalten sein werden, da ein weitestgehend vorbereiteter Auftrag möglichst schnell fertig gestellt werden kann.

Zudem ist damit der Vorteil verbunden, dass ältere, bereits eingelagerte Artikel zuerst ausgelagert werden und die Vorratslagerung durch neue Artikel ersetzt wird. Dies kann insbesondere bei der Kommissionierung von Artikeln mit begrenzter Haltbarkeit von Bedeutung sein.

Bei der erfindungsgemäßen Kommissioniervorrichtung ist eine Mehrzahl von Auslagerplätzen vorhanden. Dies ermöglicht, unterschiedlichen Aufträgen jeweils einen Auslagerplatz zuzuweisen, so dass bei denjenigen Aufträgen, bei denen nicht alle Artikel vorrätig sind, die bereits vorrätigen Artikel in den jeweiligen Auslagerplätzen zwischengelagert werden, bis eine Komplettierung des Auftrags erfolgen kann. Beispielsweise kann ein Auslagerplatz reserviert werden, sobald ein entsprechender Auftrag eingeht.

Die Auslagerplätze können unterschiedliche Aufnahmekapazitäten aufweisen, um ggf. verschieden großen Aufträgen passend zugeordnet zu werden. Selbstverständlich besteht aber auch die Möglichkeit, einem Auftrag, der die Aufnahmekapazität der Auslagerplätze überschreitet, mehreren Auslagerplätzen zuzuordnen, so dass ein zweiter (dritter, etc.) Auslagerplatz herangezogen wird, wenn ein erster Auslagerplatz voll ist. Dabei kann die Art und/oder Menge der einem Auslagerplatz zugeordneten Artikel registriert und mit der Aufnahmekapazität des entsprechenden Auslagerplatzes verglichen werden, um rechtzeitig eine Zuordnung der weiteren Artikel dieses Auftrags zu einem neuen Auslagerplatz zu beginnen.

Bei dem oder den Auslagerplätzen kann es sich vorzugsweise um einen bzw. mehrere schräge Kanäle, z.B. in einem Regalsystem handeln, die weiterhin bevorzugt verschließbar ausgeführt sind. Sobald der in dem entsprechenden Kanal gesammelte Auftrag komplettiert ist, kann dieser dann mittels der Steuerung geöffnet werden, um die zu dem Auftrag gehörenden Artikel frei zu geben.

Alternativ können für die Auslagerplätze auch Behälter verwendet werden, die beispielsweise in einem Regalsystem abgestellt sind und einzeln entnommen werden können; so können beispielsweise manuell oder mittels eines Handhabungsgeräts alle Artikel eines Auftrags gemeinsam in einem Behälter entnommen und ausgelagert werden. Ein manuelles Entnehmen kann dabei den Vorteil aufweisen, dass das Handhabungsgerät für die endgültige Auslagerung der Artikel eines Auftrags nicht belegt wird und dieses daher immer für die Einlagerung angelieferter Artikel beziehungsweise für die Kommissionierung eines Auftrags zur Verfügung steht.

Das Einsparungspotential des erfindungsgemäßen Verfahrens bzw. der erfindungsgemäßen Kommissioniervorrichtung soll im Folgenden anhand eines Beispiels erläutert werden. Hierbei wird von einem Handhabungsgerät einer Kommissioniervorrichtung ausgegangen, das 500 Packungen in der Stunde handhaben, d.h. einlagern oder auslagern kann. Unter der Annahme, dass ein Versandhändler ca. 30% des Auftragsvolumens aus seinem Vorrat entnimmt und den Rest von 2000 Aufträgen mit insgesamt 4000 Artikeln durch Großhandelslieferungen komplettiert, würde eine konventionelle Kommissioniervorrichtung 4000 Artikel täglich einlagern und 4000 Stück auslagern, was einer Laufzeit von 16 Stunden entsprechen würde. Dabei ist berücksichtigt, dass die aus dem Vorrat entnommenen Artikel auch wieder aufgefüllt werden müssen.

Eine erfindungsgemäß betriebene Kommissioniervorrichtung würde ebenfalls acht Stunden benötigen, um 4000 Artikel handzuhaben. Dabei werden jedoch die 2800 Artikel, die aus Großhandelslieferungen stammen und direkt einzelnen Aufträgen zugeordnet werden können, direkt zu den Auslagerplätzen transportiert; für diese 2800 Artikel ist demnach nur ein Zugriff durch das Handhabungsgerät erforderlich, und nicht - wie bei einem konventionellen Betrieb - zwei. Es wird somit die doppelte Handhabung dieser 2800 Artikel eingespart, was zu einer entsprechend verringerten Laufzeit des Handhabungsgeräts von 5,6 Stunden führt. Im Ergebnis ergibt sich somit für die Bearbeitung derselben 2000 Aufträge eine Gesamtlaufzeit des Handhabungsgeräts von nur 10,4 Stunden. Hierbei ergeben sich die zusätzlichen 2,4 Stunden (zu den o.g. acht Stunden) noch durch die Auslagerung von 1200 Artikeln aus der Vorratslagerung. Weiterhin ergibt sich der Vorteil, dass die 1200 bereits vorrätigen Artikel unabhängig vom Zeitpunkt der Großhandelslieferung vorkommissioniert werden können.

Die Erfindung wird nachfolgend anhand eines in einer Zeichnung dargestellten Ausführungsbeispiels näher erläutert.

In den Zeichnungen zeigt:

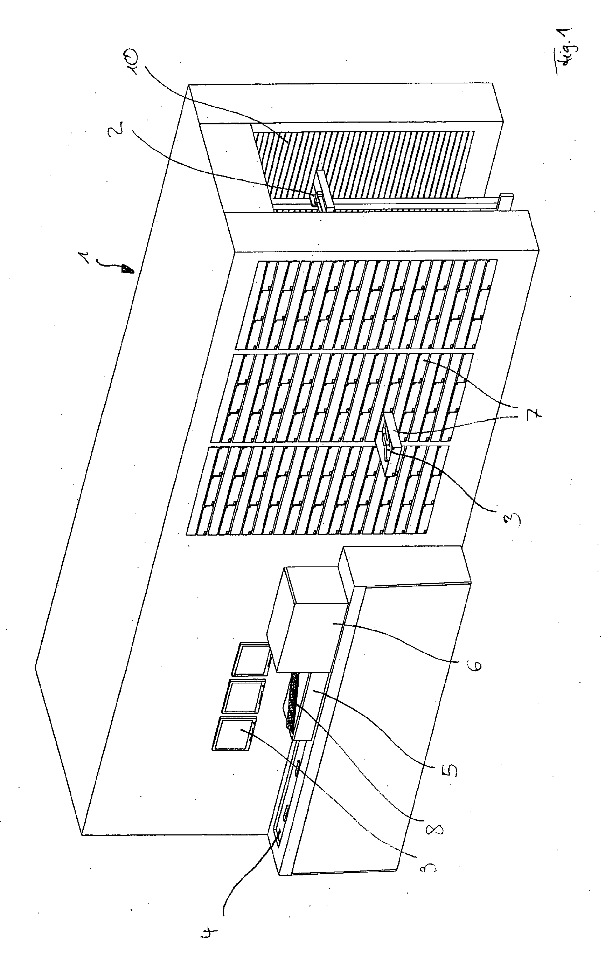

- Fig. 1:: eine erfindungsgemäße Kommissioniervorrichtung in einer isometrischen Ansicht.

Die Fig. 1 zeigt in einer isometrischen Ansicht eine erfindungsgemäße Kommissioniervorrichtung für Medikamentenpackungen. Diese umfasst ein Lager, das als verkleidetes, doppelreihiges Regallager 1 ausgebildet ist. Zwischen den zwei Regalreihen ist ein Bewegungsraum für ein Handhabungsgerät 2 vorgesehen. Das Handhabungsgerät 2 dient unter anderem dazu, Arzneimittelpackungen 3 in Vorratslagerplätzen 10 des Regallagers 1 einzulagern oder aus diesen auszulagern. Ein Einlagern erfolgt durch ein Ablegen einer neu gelieferten Medikamentenpackung 3 auf einem Förderband 4, das die Medikamentenpackung 3 dann durch einen Scanbereich 5 fährt, in der der auf der Medikamentenpackung 3 abgedruckte Barcode gescannt wird; die dadurch erfolgte Identifizierung ermöglicht, einen passenden Vorratslagerplatz in dem Regallager 1 aufzufinden oder die Medikamentenpackung 3 direkt einem vorab bereits gespeicherten Auftrag zuzuordnen.

Nach dem Scannen wird die Medikamentenpackung 3 weiter in einen Aufnahmebereich 6 des Handhabungsgeräts 2 transportiert, wo diese von dem Handhabungsgerät 2 aufgenommen und weiter transportiert werden kann. Ein Auslagern einzelner Medikamentenpackungen 3 kann ebenfalls mittels des Handhabungsgeräts 2 erfolgen; die Medikamentenpackung wird dabei zu einer Ausgabestation (nicht dargestellt) transportiert und dort über eine Rutsche ausgegeben; dort kann sie manuell entnommen werden.

Die Kommissioniervorrichtung ist mit einer Vielzahl von Auslagerplätzen versehen, die als Schubladen 7 in die vordere Außenwand des Regallagers 1 integriert sind.

Die Steuerung der Kommissioniervorrichtung ist erfindungsgemäß derart ausgeführt, dass Aufträge, die mehrere Medikamentenpackungen 3 umfassen, jeweils in einer der Schubladen 7 kommissioniert werden. Dadurch können diejenigen Medikamentenpackungen 3, die bereits in dem Regallager vorhanden, d.h. vorrätig sind, mittels des Handhabungsgeräts 2 den Aufträgen entsprechend in den einzelnen Schubladen 7 abgelegt werden, bis diese durch Medikamentenpackungen 3, die erst noch geliefert und durch die Kommissioniervorrichtung identifiziert werden müssen, komplettiert werden können.

Die neu gelieferten Medikamentenpackungen 3, die für bereits gespeicherte Aufträge vorgesehen sind, werden von dem Handhabungsgerät 2 erfindungsgemäß den Aufträgen entsprechend direkt zu den jeweiligen Schubladen 7 transportiert. Die so komplettierten Aufträge können dann durch ein Herausziehen der jeweiligen Schubladen 7 einfach entnommen werden.

Die Steuerung der Kommissioniervorrichtung wird über ein Eingabegerät, das in Form einer Tastatur 8 sowie mehrerer berührungsempfindlicher Bildschirme 9 vorgesehen ist, manuell beeinflusst. Über dieses Eingabegerät können auch die Aufträge eingegeben oder verändert werden.

## Patentansprüche

1. Verfahren zum Betrieb einer Kommissioniervorrichtung mit
- einem Lager mit Vorratslagerplätzen (10) und einem Auslagerplatz (7),
- einem Handhabungsgerät (2) zum Einlagern von Artikeln in die Vorratslagerplätze (10) und zum Auslagern aus den Vorratslagerplätzen (10),
- einer Eingangserfassungseinheit (5) zum Identifizieren der einzulagernden Artikel,
- einer Eingabeeinheit (8,9) zur Bestimmung der auszulagernden Artikel sowie
- einer Steuerung, die in Abhängigkeit von den Signalen der Eingangserfassungseinheit (5) das Handhabungsgerät (2) steuert,
wobei Artikel, die vor der Identifizierung durch die Eingangserfassungseinheit (5) bereits mittels der Eingabeeinheit (8,9) als auszulagernd bestimmt worden sind, mittels des Handhabungsgeräts (2) direkt zu dem Auslagerplatz (7) transportiert werden,
**dadurch gekennzeichnet, dass** eine Mehrzahl von auszulagernden Artikeln mittels der Eingabeeinheit (8,9) zu einem Auftrag zusammengefasst werden, wobei die Artikel des Auftrags vor der Auslagerung an dem Auslagerplatz (7) gesammelt werden und eine Mehrzahl von Auslagerplätzen (7) vorhanden ist, wobei unterschiedlichen Aufträqen jeweils ein oder mehrere Auslagerplätze (7) zugewiesen werden.

2. Verfahren gemäß Anspruch 1, **dadurch gekennzeichnet, dass** diejenigen Artikel eines Auftrags, die zum Zeitpunkt der Eingabe des Auftrags bereits in den Vorratslagerplätzen (10) vorhanden sind, aus den Vorratslagerplätzen (10) ausgelagert und zu dem Auslagerplatz (7) transportiert werden.

3. Kommissioniervorrichtung mit
- einem Lager mit Vorratslagerplätzen (10) und einem Auslagerplatz (7),
- einem Handhabungsgerät (2) zum Einlagern von Artikeln in die Vorratslagerplätze (10) und zum Auslagern aus den Vorratslagerplätzen (10),
- einer Eingangserfassungseinheit (5) zum Identifizieren der einzulagernden Artikel,
- einer Einaabeeinheit (8,9) zur Bestimmung der auszulagernden Artikel sowie
- einer Steuerung, die in Abhängigkeit von den Signalen der Eingangserfassungseinheit (5) das Handhabungsgerät (2) steuert,
wobei eine Programmierung der Steuerung derart vorhanden ist, dass Artikel, die vor der Identifizierung durch die Eingangserfassungseinheit (5) bereits mittels der Eingabeeinheit (8,9) als auszulagernd bestimmt worden sind, mittels des Handhabungsgeräts (2) direkt zu dem Auslagerplatz (7) transportiert werden, **dadurch gekennzeichnet,**
**dass** die Programmierung für eine Zusammenfassung einer Mehrzahl von auszulagernden Artikeln mittels der Eingabeeinheit (8,9) zu einem Auftrag ausgestaltet ist,
wobei die Artikel des Auftrags vor der Auslagerung an dem Auslagerplatz (7) gesammelt werden und die Kommissioniervorrichtung ferner eine Mehrzahl von Auslagerplätzen (7) aufweist und die Programmierung derart ausgestaltet ist, unterschiedlichen Aufträgen jeweils einen oder mehrere Auslagerplätze (7) zuzuweisen.

4. Kommissioniervorrichtung gemäß Anspruch 3, **dadurch gekennzeichnet, dass** die Auslagerplätze (7) in Form eines verschließbaren schrägen Kanals ausgebildet sind, wobei der Kanal von der Steuerung geöffnet wird, wenn ein Auftrag vollständig ist.

5. Kommissioniervorrichtung gemäß Anspruch 3, **dadurch gekennzeichnet, dass** die Auslagerplätze (7) in Form eines aus der Kommissioniervorrichtung entnehmbaren Behälters und insbesondere einer Schublade (7) ausgebildet sind.

## Claims

1. Method for the operation of a picking device with
- a store with storage spaces (10) and a retrieval space (7),
- a handling device (2) for the loading of items in the storage spaces (10) and the retrieval of items from the storage spaces (10),
- an input detection unit (5) for identification of the loaded item,
- an input unit (8,9) to determine the retrieved item as well as
- a controller, which controls the handling device (2) independently of the signals from the input detection unit (5),
wherein items that have already been determined as retrievable by means of the input unit (8,9) prior to identification through the input detection unit (5) are transported directly to the retrieval space (7) by means of the handling device (2), **characterised in that** a plurality of retrievable items are combined into one order by means of the input unit (8,9), wherein the items of the order are collected at the retrieval space (7) before retrieval and a plurality of retrieval spaces (7) are available, wherein various orders are each allocated one or many retrieval spaces (7).

2. Method according to Claim 1, **characterised in that** said items of the order, which at the time of the entry of the order are already available in the storage spaces (10), are retrieved from the storage spaces (10) and transported to the retrieval space (7).

3. Picking device with
- a store with storage spaces (10) and a retrieval space (7),
- a handling device (2) for the loading of items in the storage spaces (10) and the retrieval of items from the storage spaces (10),
- an input detection unit (5) for identification of the loaded item,
- an input unit (8,9) to determine the retrieved item as well as
- a controller, which controls the handling device (2) independently of the signals from the input detection unit (5),
wherein a programming of the controller is available, such that items that have already been determined as retrievable by means of the input unit (8,9) prior to identification through the input detection unit (5) are transported directly to the retrieval space (7) by means of the handling device (2), **characterised in that** the programming for a combination of a plurality of retrievable items is configured for an order by means of the input unit (8,9), wherein the items of the order are collected before transfer to the retrieval space (7) and the picking device further comprises a plurality of retrieval spaces (7) and the programming is configured such that various orders are each allocated one or many retrieval spaces (7).

4. Picking device according to Claim 3, **characterised in that** the retrieval spaces (7) are in the form of an inclined closed channel, wherein the channel is opened by the controller when an order is complete.

5. Picking device according to Claim 3, **characterised in that** the retrieval spaces (7) are in the form of a container removable from the picking device and in particular a drawer (7).

## Revendications

1. Procédé de fonctionnement d'un dispositif de préparation de commandes, comprenant
- un magasin avec des emplacements de magasin de stockage (10) et un emplacement de déstockage (7),
- un appareil de manipulation (2) pour stocker des articles dans les emplacements de magasin de stockage (10) et pour les déstocker des emplacements de magasin de stockage (10),
- une unité de détection d'entrée (5) pour identifier les articles à stocker,
- une unité d'introduction (8, 9) pour déterminer les articles à déstocker et
- une commande qui commande l'appareil de manipulation (2) en fonction des signaux de l'unité de détection d'entrée (5),
dans lequel des articles qui, avant l'identification par l'unité de détection d'entrée (5), ont déjà été déterminés comme étant à déstocker au moyen de l'unité d'introduction (8, 9) sont transportés directement à l'emplacement de déstockage (7) au moyen de l'appareil de manipulation (2),
**caractérisé en ce qu'**une pluralité d'articles à déstocker sont regroupés en une commande au moyen de l'unité d'introduction (8, 9), les articles de la commande étant rassemblés à l'emplacement de déstockage (7) avant le déstockage et
une pluralité d'emplacements de déstockage (7) est prévue, un ou plusieurs emplacements de déstockage (7) étant chaque fois associés à des commandes différentes.

2. Procédé selon la revendication 1, **caractérisé en ce que** les articles d'une commande qui sont déjà présents dans les emplacements de magasin de stockage (10) au moment de l'introduction de la commande sont déstockés des emplacements de magasin de stockage (10) et transportés à l'emplacement de déstockage (7).

3. Dispositif de préparation de commandes comprenant
- un magasin avec des emplacements de magasin de stockage (10) et un emplacement de déstockage (7),
- un appareil de manipulation (2) pour stocker des articles dans les emplacements de magasin de stockage (10) et pour les déstocker des emplacements de magasin de stockage (10),
- une unité de détection d'entrée (5) pour identifier les articles à stocker,
- une unité d'introduction (8, 9) pour déterminer les articles à déstocker et
- une commande qui commande l'appareil de manipulation (2) en fonction des signaux de l'unité de détection d'entrée (5),
une programmation de la commande étant prévue de telle sorte que des articles qui, avant l'identification par l'unité de détection d'entrée (5), ont déjà été déterminés comme étant à déstocker au moyen de l'unité d'introduction (8, 9) soient transportés directement à l'emplacement de déstockage (7) au moyen de l'appareil de manipulation (2),
**caractérisé en ce que** la programmation est conçue pour regrouper en une commande, au moyen de l'unité d'introduction (8, 9), une pluralité d'articles à déstocker,
les articles de la commande étant rassemblés à l'emplacement de déstockage (7) avant le déstockage et le dispositif de préparation de commandes présentant en outre une pluralité d'emplacements de déstockage (7) et la programmation étant conçue de sorte à associer chaque fois un ou plusieurs emplacements de déstockage (7) à des commandes différentes.

4. Dispositif de préparation de commandes selon la revendication 3, **caractérisé en ce que** les emplacements de déstockage (7) sont réalisés sous la forme d'un canal incliné pouvant être fermé, le canal étant ouvert par la commande quand une commande est complète.

5. Dispositif de préparation de commandes selon la revendication 3, **caractérisé en ce que** les emplacements de déstockage (7) sont réalisés sous la forme d'un contenant pouvant être retiré du dispositif de préparation de commandes et en particulier d'un tiroir (7).
